(19) Europäisches Patentamt

European Patent Office

Office européen des brevets

(11) **EP 0 361 523 B1**

(12) **EUROPEAN PATENT SPECIFICATION**

(45) Date of publication and mention
of the grant of the patent:
**17.01.1996 Bulletin 1996/03**

(51) Int Cl.⁶: **G02B 7/28**

(21) Application number: **89118100.0**

(22) Date of filing: **29.09.1989**

(54) **Autofocusing system for a camera**

Automatisches Fokussierungssystem für eine Kamera

Système de mise au point automatique d'une caméra

(84) Designated Contracting States:
**DE FR GB**

(30) Priority: **29.09.1988 JP 245682/88**

(43) Date of publication of application:
**04.04.1990 Bulletin 1990/14**

(73) Proprietor: **ASAHI KOGAKU KOGYO KABUSHIKI KAISHA
Tokyo 174 (JP)**

(72) Inventors:
 • **Suzuki, Noboru c/o Asahi Kogaku Kogyo K.K.
Tokyo (JP)**
 • **Toji, Shigeo
Tokyo (JP)**
 • **Kawasaki, Masahiro
c/o Asahi Kogaku Kogyo K.K.
Tokyo (JP)**

(74) Representative: **Schaumburg, Thoenes & Thurn
D-81679 München (DE)**

(56) References cited:
**US-A- 4 717 933**

 • **PATENT ABSTRACTS OF JAPAN, vol. 10, no. 177 (P-470)[2233], 21st June 1986; & JP-A-61 26 015**
 • **PATENT ABSTRACTS OF JAPAN, vol. 11, no. 68 (P-553)[2515], 28th February 1987; & JP-A-61 230 111**
 • **BJP - BRITISH JOURNAL OF PHOTOGRAPHY, vol. 135, no. 6657, 10th March 1988, page 21, London, GB ; P. WEST : "Novel construction for autofocus video zoom lens from Minolta"**

## Description

### Background of the Invention

The present invention relates to an autofocusing system in the macro zone of a zoom lens and the preamble of Claim 1 corresponds to JP-A- 61 26 015.

Power zoom lenses driven by drive means such as a motor have recently been employed in so-called compact cameras fitted with an uninterchangeable photographic lens.

In an autofocusing system for such a compact camera equipped with the power lens, a zooming lens group is adjusted, in the zooming zone of a photographic zoom lens, in such a manner that an image of an object is formed on a film plane. Consequently, only a focusing lens group is driven to be in focus after the drive means is used to move and set the zooming lens group to have the certain focal length.

Incidentally, some photographic zoom lenses are designed to have the macro zone for use in close-up photographing by locating the zooming lens group outside the zooming zone.

In the macro zone, however, the focal length of the zooming lens group is constant and, because of photographing at a close distance, the distance between the photographic lens and the film needs adjusting so that the distance between the lens and the film corresponds to the distance between the lens and the object by delivering each lens group by a large amount to form an image of the object on the film.

Notwithstanding, a known arrangement is to control the zooming lens group in the macro zone independently of the autofocusing system as in the zooming zone, and the photographic lens is brought into in-focus condition by driving only the focusing lens group.

For the reason set forth above, the photographic lens may not be brought into in-focus condition only by driving the focusing lens group, depending on the location of the zooming lens group on the optical axis.

### Summary of the Invention

It is therefore an object of the invention is to provide an autofocusing system for a camera capable of ensuring automatic focusing in the macro zone.

For the above purpose, according to the present invention, there is provided an autofocusing system as defined in Claim 1.

### Description of the Accompanying Drawings

Fig. 1 shows a block diagram illustrating a system configuration as a whole;

Fig. 2 shows a circuit diagram in a camera body;

Fig. 3 shows a circuit diagram in a photographic lens;

Figs. 4 and 5 show main flowcharts representing automatic focusing in the macro zone of this system;

Fig. 6 shows initializing subroutine;

Fig. 7 shows a subroutine for driving a focusing lens group in the direction of Near end of the macro zone;

Fig. 8 shows a subroutine for driving a zooming lens group in the direction of Far end of the macro zone;

Fig. 9 shows a subroutine for stopping driving the zooming lens group;

Fig. 10 shows a subroutine for driving the focusing lens group in the direction of Near end;

Fig. 11 shows a subroutine for driving the focusing lens group in the direction of Far end;

Fig. 12 shows an AF end-point processing subroutine;

Fig. 13 shows an AF drive stop subroutine;

Fig. 14 shows an AF stop subroutine, and

Fig. 15 shows a constant image magnification subroutine.

### Description of the Embodiments

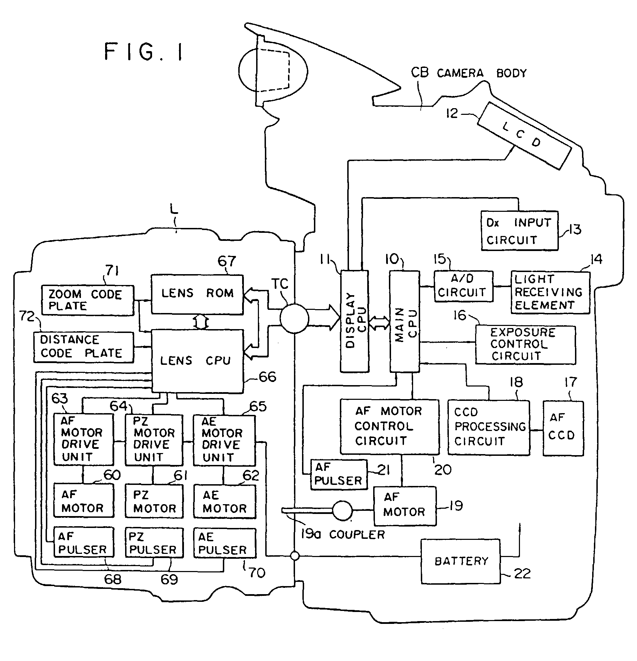

Referring to the accompanying drawings, a description will subsequently be given of an embodiment of the present invention applied to an automatic single-lens reflex camera and also applicable to a still video camera or the like. A camera body CB in this embodiment has a known construction in that it may be fitted with various kinds of photographic lenses interchangeably as illustrated in Fig. 1 and more specifically the camera body CB is fitted with a powerzoom type photographic lens L having the macro zone and made switchable to the macro zone manually from the L- end of the zooming zone, i.e., the extended side end of the photographic lens.

Fig. 1 is a block diagram of a system in combination of a photographic lens L and a camera body CB.

The camera body CB is equipped with two CPUs: a main CPU 10 for processing various kinds of photographic data; and a display CPU 11 for receiving data mainly via switches, transmitting and receiving data to and from the photographic lens L, and displaying the data. With these CPUs as the main components, the camera body CB further comprises an LCD panel 12 for displaying various kinds of data, a DX code input circuit 13 for receiving ISO (International Standard Organization) sensitivity of a film for use based on the DX code printed on a film cassette, a light receiving element 14 for measuring the luminance of an object by luminous flux incident via the photographic lens L, an A/D (Analog/ Digital) converter 15 for subjecting the output of the light receiving element to A/D conversion, an exposure control circuit 16 for controlling a shutter on the basis of various photographic conditions given, an AF CCD 17 for receiving an optical image of the object formed by the luminous flux incident via the photographic lens L, and a CCD processing circuit 18 for detecting the in-focus state of the photographic lens L from the output of the AF CCD 17.

An automatic focusing (AF) motor 19 for focusing the photographic lens, together with an AF motor control circuit 20 for driving the AF motor 19 by computing the output of the CCD processing circuit 18 and an AF pulser 21 for detecting the drive amount of the AF motor 19, is used for transmitting the driving force toward the photographic lens L via a coupler 19a provided at a mount port when the photographic lens L of a conventional type without AF motor is mounted. The AF motor 19 is not used in such a case as shown in Fig. 1.

A battery 22 is designed to supply power to the motors, which will be described later, within the photographic lens L and to a CPU in addition to each active element in the camera body CB.

The photographic lens L incorporates three motors: an AF motor 60, a power zoom (PZ) motor 61 and an automatic exposure (AE) control motor 62, whereby the driving force within the lens can be generated for automatic focusing, power zooming and exposure control.

The photographic lens L has cam mechanisms similar to those of a conventional type for effecting focusing and zooming by means of cam rings for use in moving the first and second lens groups relative to the optical axis, the aforementioned AF motor 60 and the PZ motor 61 being used for driving the cam rings to rotate.

The motors are controlled by a lens CPU 66 via an AF motor drive unit 63, a PZ motor drive unit 64 and an AE motor drive unit 65, respectively.

A data input means for the lens CPU 66 comprises a lens ROM 67 as means for storing data inherent in the lens; an AF pulser 68, a PZ pulser 69 and an AE pulser 70 for detecting the drive amouonts of the respective motors in the form of pulses; a zoom code plate 71 and a distance code plate 72 for detecting the respective rotational positions of the zooming and focusing cam rings.

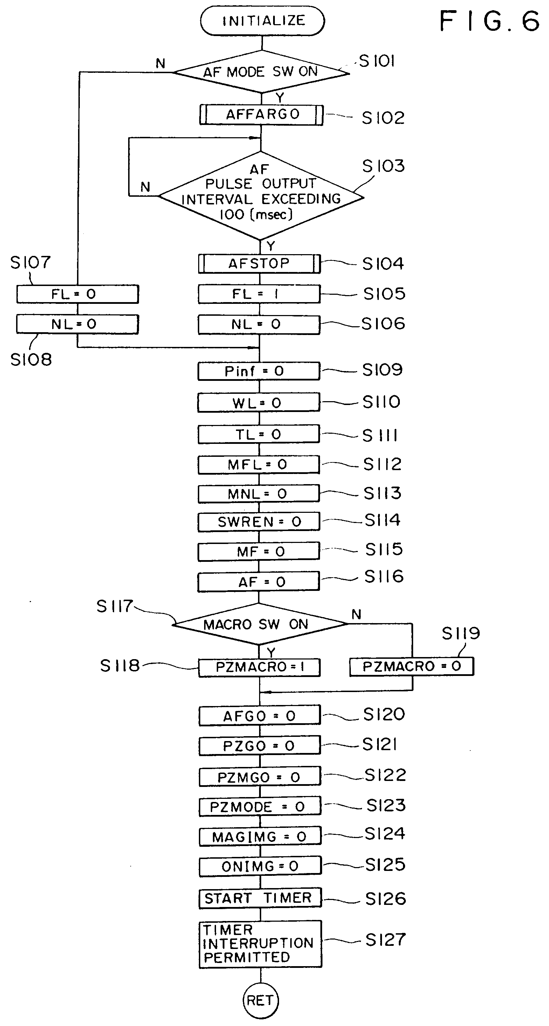

In this embodiment, the zoom code plate 71 renders available the data on whether the zooming lens group is located in the zooming zone or the macro zone. The on/off state of a macro switch referred to in step 117 of a flowchart in Fig. 6 signifies, with reference to the data derived from the code plate 71, whether the zooming lens group is in the macro zone.

The code plate actually consists of the code plate secured to the cam ring and a plurality of brushes slidably in contact with the code plate fitted to the fixed ring and arranged so that the absolute rotational position of each cam ring is detected from a state in which the brushes come into contact therewith. However, the term "code plate" is used as a general term given to these as a whole for convenience.

The lens CPU 66 is coupled to the control subjects and the input means and also capable of communicating with the camera body CB via groups of electric contacts TC as will be described later; e.g. it functions as means for computing the aforesaid drive amount while referring to the data stored in the lens ROM 67 upon receipt of the defocus amount detected on the camera body CB side, for driving the AF motor 60 while detecting the drive amount using the AF pulser 60, and for driving the AE motor 62 to rotate while detecting the drive amount using the AE pulser 70 on the basis of the exposure value determined on the camera body CB side.

A group of 10 electrical contacts T1 is provided on the lens mounting portion of the camera body CB. These contacts are insulated from the outer mounting surface of the camera mounting rings.

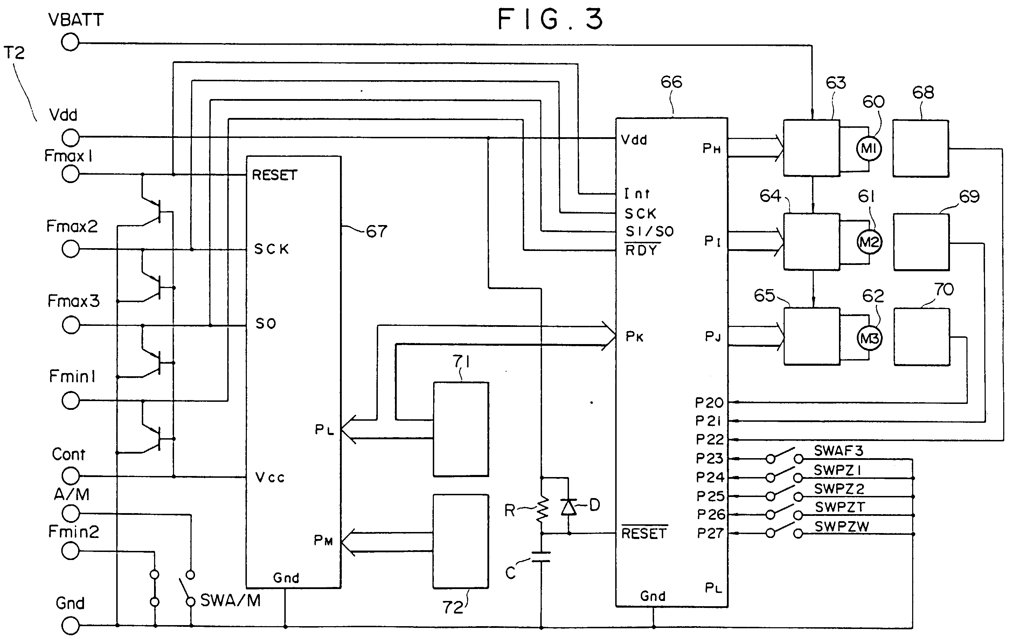

On the other hand, a group of electric contacts T2 corresponding to the group of electric contacts T1 provided on the camera body CB side are provided in the mount portion of the photographic lens L (Fig. 3).

When the photographic lens L is mounted in the camera body CB, these groups of electric contacts T1, T2 make contact with their respective counterparts to form the aforementioned groups of electric contacts TC.

Referring to detailed circuit diagrams, this system will be described further.

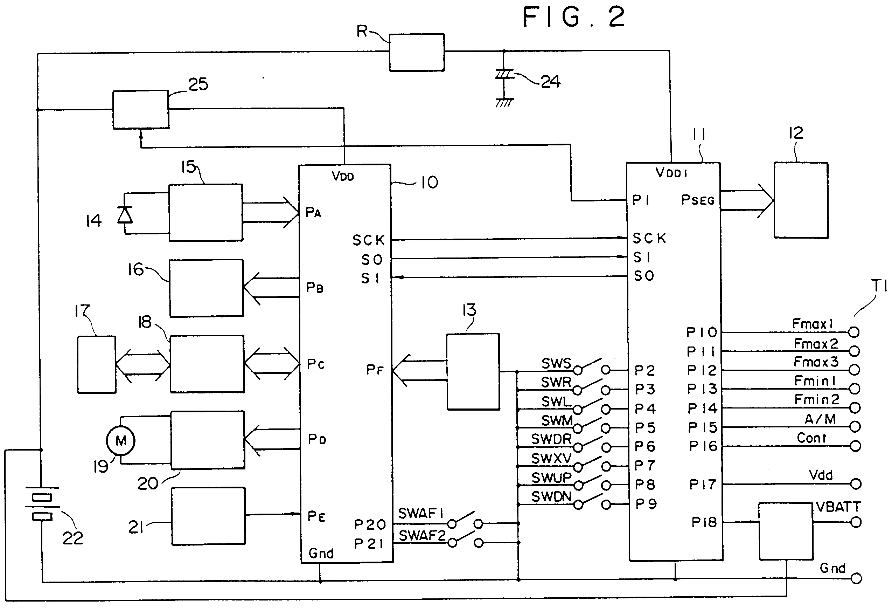

Fig. 2 shows a circuit diagram in the camera body CB.

The voltage of the battery 22 is applied, after being transformed by a regulator R and backed up by a super capacitor 24, to a terminal VDD1 of the display CPU 11, which is always operated at constant voltage.

Moreover, a terminal P1 of the display CUP 11 is connected to a DC/DC converter 25 for turning on /off the power supply of the main CPU 10; a terminal P2 to a photometric switch SWS being turned on when a shutter button is depressed by one step; a terminal P3 to a release switch SWR being turned on when the shutter button is depressed by two steps; and a terminal P4 to a lock switch SWL being turned on when the camera is set to a photographic condition. The data from each switch is thus supplied to the display CPU 11.

The DC/DC converter 25 supplies power to a terminal VDD of the main CPU 10 to operate it when the photometric switch SWS is turned on while the lock switch SWL is held on.

A terminal P5 of the display CPU 11 is connected to a mode switch SWM for making a photographic mode selectable from among program, auto and manual photographic modes; a terminal P6 to a drive switch SWDR for making selectable either a single shot or sequential-shots modes while the switch SWDR is held on; and a terminal P7 to an exposure correction switch SWXV for making correctable the set exposure while the switch SWXV is held on. Each setting can be altered by operating an up-count switch SWUP connected to a terminal P8 or a down-count switch SWDN connected to a terminal P9 while the switches connected to the terminals P5 - P7 are held on.

A group of terminals PSEG are used for driving the LCD panel 12 to display stored data when the lock switch SWL is turned on.

A group of contacts PA of the main CPU 10 are connected to a photometric A/D circuit 15; a group of contacts PB to an exposure circuit 16; a group of contacts PC to the CCD processing circuit 18; a group of contacts PD to the AF motor control circuit 20; a group of contacts PE to the AF pulser 21; and a group of contacts PF to the DX code input circuit 13.

As set forth above, the A/D circuit 15 is connected to the photometric light receiving element 14; the CCD processing circuit 18 to the AF CCD 17; and the AF motor control circuit 20 to the AF motor 19 within the camera body CB.

A terminal P20 of the main CPU 10 is connected to a first autofocusing switch SWAF1 for switching an auto mode wherein focusing is effected by driving the AF motor to a manual mode wherein it is effected manually and vice versa, whereas a terminal P21 is connected to a second autofocusing switch SWAF2 for switching priority given to focusing to what is given to releasing in a shutter release mode.

Fig. 3 shows a circuit diagram in the photographic lens L.

A contact VBATT on the lens side is connected to each of the motor drive units 63, 64, 65 and power is directly supplied from the battery 22 in the camera body CB to each of the motors 60, 61, 62 by switching the drive units one after another.

The motor drive units 63, 64, 65 are connected to groups of terminals PH, PI, PJ of the lens CPU 66 and controlled thereby, respectively. The pulsers 68, 69, 70 are connected to terminals P20 - P22 and used to deliver the drive amounts of the respective motors to the lens CPU 66.

A contact Vdd is used to supply power supplied from the display CPU 11 on the camera body CB side to a terminal Vdd of the lens CPU 66 and a reset circuit comprising a resistor R, a diode D and a capacitor C.

The resistor and the capacitor allow the reset circuit to have a fixed time constant and the reset circuit has the function of having the program fed to the lens CPU 66 started by a switching terminal $\overline{\text{RESET}}$ of the lens CPU 66 from an active (L) to nonactive state (H) when the power supply voltage is stabilized with the passage of predetermined time after the actuation of Vdd.

Terminals P23 - P27 of the lens CPU 66 are connected to a third autofocusing switch SWAF3 for auto-to-manual switching of the autofocusing system provided on the lens side, a zoom changeover switch SWPZ1 for selection of zooming effected automatically by means of the motor or what is effecxted manually, a constant magnification switch SWPZ2 for effecting zooming automatically in company with the movement of the lens relative to the object so as to hold an image magnification, a zoom switch SWPZT on the Tele side for use in driving the PZ motor 69 in such a manner as to move the photographic lens L in a direction in which the focal length of the lens is prolonged, and a zoom swith SWPZW on the Wide side for use in driving the PZ motor in such a manner as to move the photographic lens L in a direction in which the focal length thereof is shortened.

The lens CPU 66 is equipped with a terminal INT for receiving an electric signal which is applied to interrupt the program being executed by the CPU, a terminal SCK for receiving a serial clock from the display CPU 11 on the camera body CB side, a terminal SI/SO for serially transferring data, and a terminal $\overline{\text{RDY}}$ for synchronizing serial communication of the lens CPU 66 with peripheral equipment.

The terminal INT allows the lens CPU 66 to be interrupted at L→H after $\overline{\text{RESET}}$, whereas the terminal $\overline{\text{RDY}}$ makes the display CPU 11 on the camera body CB side remain on standby to prevent it from executing the serial communication at H and permits it to carry on the serial communication at L.

Like the groups of terminals PL, PM of the lens ROM 67, a group of terminals PK of the lens CPU 66 are connected to the zoom code plate 71 and the distance code plate 72 and made to receive focal length data and distance data corresponding to the actual state of the lens.

The lens ROM 67 stores data inherent in the photographic lens L; e.g. fixed data concerning f-number at open aperture, f-number at minimum open aperture, the amount of change of f-number accompanied by zooming, and variable data.

The data stored in the lens ROM 67 is under the control of the lens CPU 66 or transferred via the groups of electric contacts TC to the CPU on the camera body CB side in compliance with the direct request from the CPU on the camera body CB side.

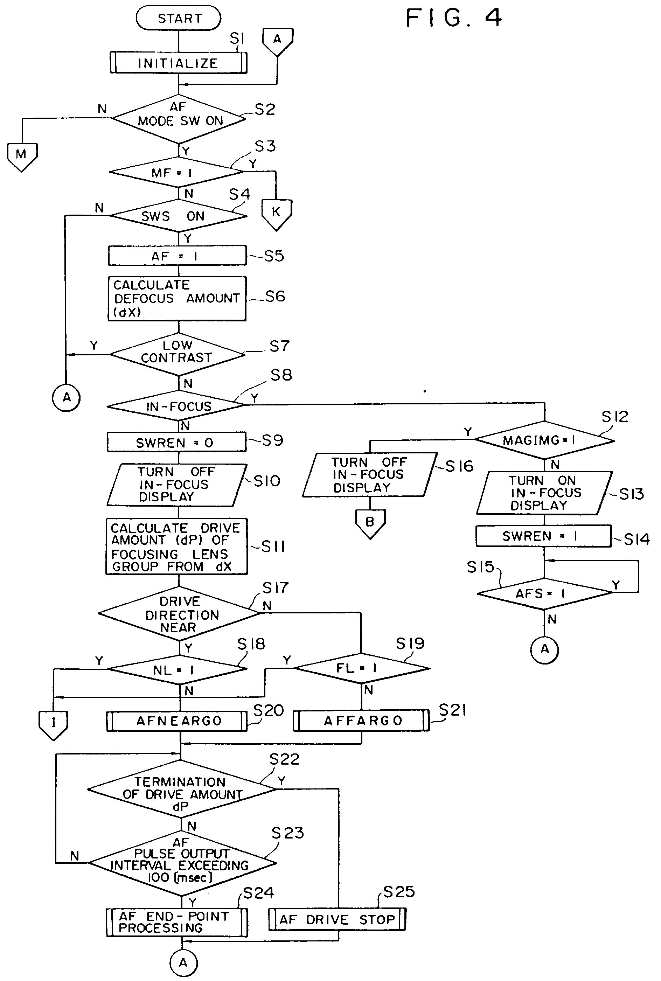

With this arrangement, the automatic focusing operation is performed in the macro zone as shown by flowcharts of Figs. 4 - 13 in the camera system having the aforementioned functions.

Referring to Fig. 4, a description will be given of a main flowchart concerning automatic focusing first.

The following program is started when power is supplied from the DC/DC converter 25 as the photometric switch SWS is turned on while the lock switch SWL is held on.

When the program is thus started, an initializing subroutine is first executed in Step 1, and Step 2 is followed. The contents of the initializing subroutine will be described in Fig. 6 later.

In Step 2, a decision is made on whether an AF mode has been set up after the AF mode switch is turned on.

If the AF mode has not yet been set up, this event has to be excluded since this flowchart is not intended to show the process in which the program works in this case.

Step 3 then follows provided the AF mode has been set up. In the case of a manual mode other than the AF mode, processing can only be achieved in the manual mode and therefore automatic focusing is not fulfilled (M of Fig. 4).

In Step 3, a decision is made on whether manual focusing is being carried out.

If YES, it means the AF mode has been switched to the manual focusing and, since this flowchart is not intended to show the process in which the program works as in the case of Step 2, the flow returns via an NG processing mode to Step 2 and enters the manual mode (K of Fig. 4).

If NO, Step 4 follows and a decision is made on whether the photometric switch SWS is held on. If YES, a flag representing the AF mode is set in Step 5 and an AF operation starts.

If the decision is NO In Step 4, the flow returns to Step 2 because user's intention to take pictures is not confirmable and keeps cycling through Steps 2 - 4 to wait for the photometric switch SWS to be turned on.

When the AF operation starts in Step 5, the defocus amount dx detected by such a detector as the AF CCD 17 is computed in Step 6 and a decision is made on whether the contrast of the signal detected in the CCD 17 is low in Step 7.

If YES, the flow returns to Step 2 because automatic focusing is hardly attainable with the data abtained by, the CCD 17 and keeps cycling through Steps 2 - 7 to wait for the contrast to be recovered or the manual mode to be selected.

If NO, a decision is made on whether an in-focus state exists in Step 8.

If that state as it stands is not the in-focus state, the decision becomes NO and Steps 9 - 11 are followed. In Steps 9 - 11, a flag SWREN representing the inhibition of the actuation of the release switch SWR or whether the release operation is permitted is set to 0; in-focus display is turned off (S10); and the drive amount dp of the focusing lens group is computed from the defocus amount dx (S11).

If the state as it stands is judged the in-focus state in Step 8, Steps 12 - 16 follow and a decision is made on whether the image magnification is being controlled constantly in Step 12. If NO, the incocus display is turned on and a flag representing the permission of the actuation of the release switch SWR is set in Step 14 and Step 15 follows.

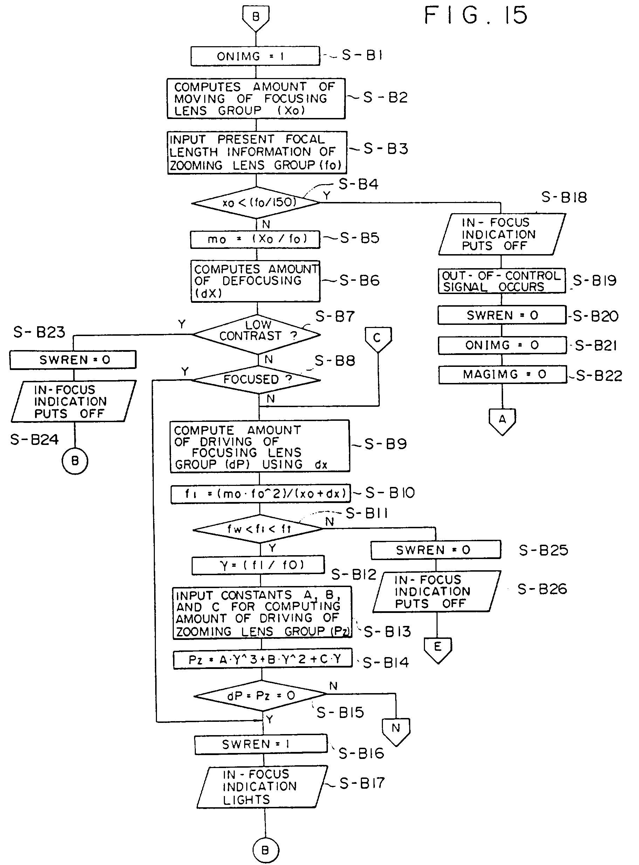

If YES in Step 12, on the other hand, the in-focus display is turned off in Step 16 and a constant image magnification control mode follows. This subroutine B is shown in Fig. 15.

In Step 15, a decision is made on whether an in-focus preferential mode has been set up. If YES with the in-focus state being thus created, the focus lock is implemented, whereas if the decision is NO, the flow returns to Step 2 (A).

When the drive amount dp of the focusing lens group is computed with NO decision in Step 8 as set forth above, the drive direction of the focusing lens group is determined according to the signal given by the aforementioned detector in the following step 17. A decision is then made on whether the focusing lens group is located at the Near end in Step 18 when that drive direction is pointed to the Near side, whereas a decision is made on whether the focusing lens group is located at the Far end in Step 19 when the drive direction is pointed to the Far side.

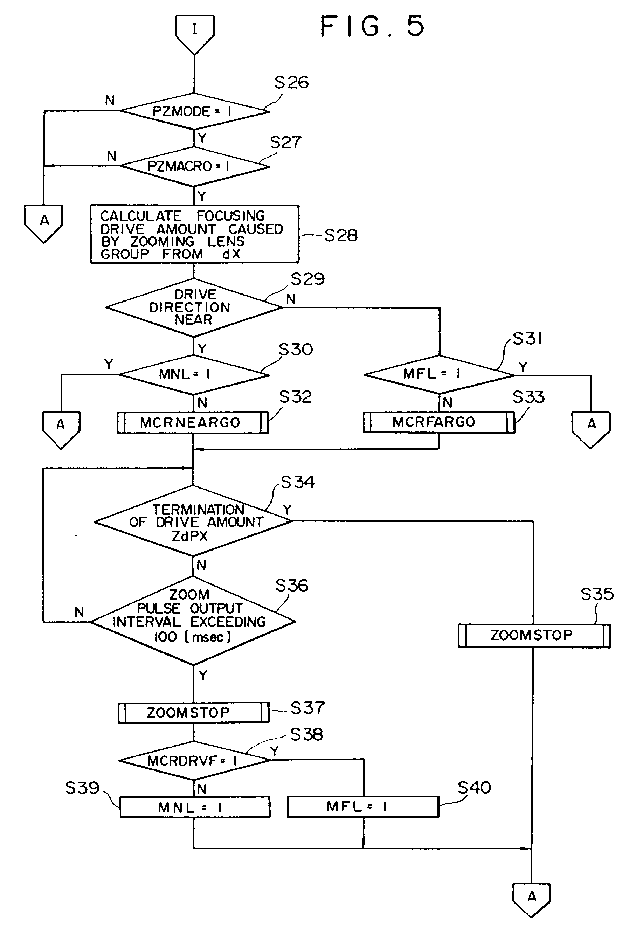

If YES in these steps 18, 19, AF processing in the macro zone is started according to I of Fig. 4 (This processing will be described later with reference to Fig. 5).

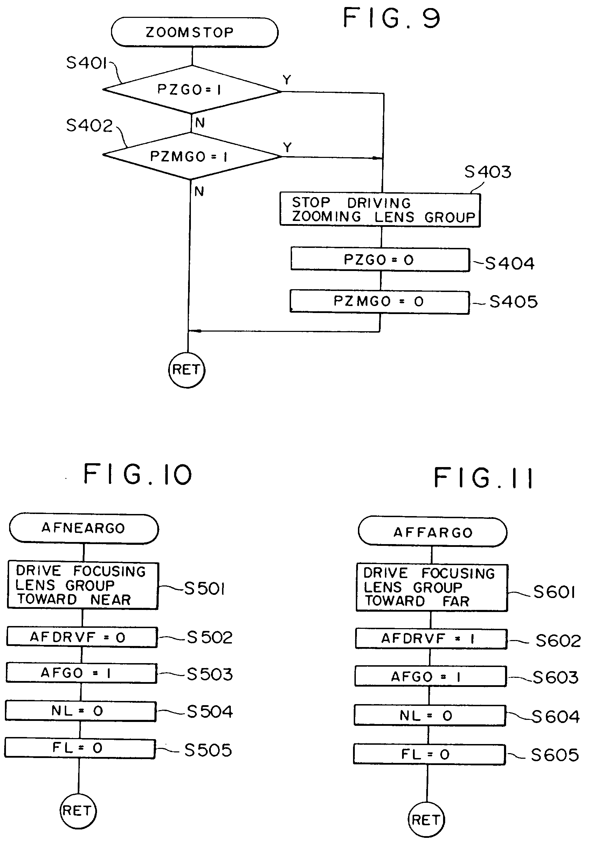

If NO in these steps 18, 19, a subroutine (Figs. 10, 11) for moving the focusing lens group to the end point on the drive direction side is executed in Step 20 or 21. Irrespective of the results obtained therefrom, Step 22 follows.

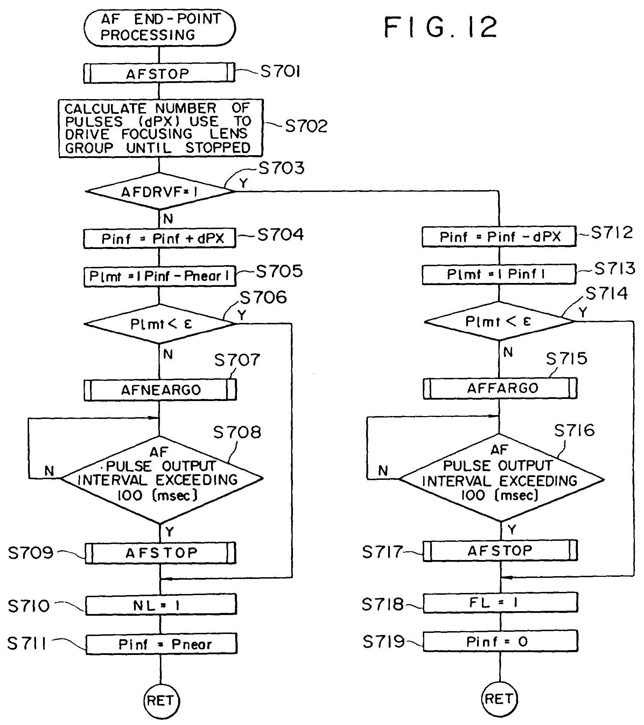

In Step 22, a decision is made on whether the focusing lens group has completely been driven to the extent of the drive amount dp. If NO, a decision is made on whether the pulse of the AF pulser 68 is output at intervals exceeding 100 msec in Step 23. If the output interval exceeds 100 msec, an AF end-point processing subroutine (Fig. 12) is executed in Step 24, and the flow returns to Step 2.

If the output interval is not greater than 100 msec, the flow returns to step 22 and keeps cycling through steps 22, 33 to wait for the completion of the drive amount dP or for the AF pulser 68 to be output at intervals of 100 msec.

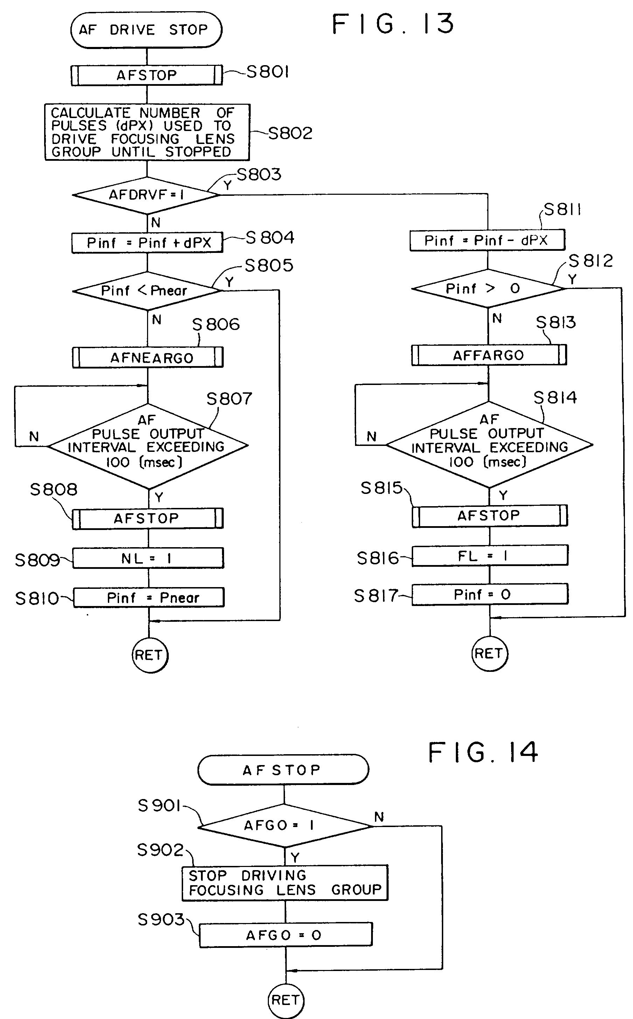

If YES in step 22, i.e. upon termination of the driving of the focusing lens group by the drive amount dp, Step 25 follows and, after an AF drive stop subroutine (as will be described in Fig. 13) is executed, the flow returns to Step 2. Photographing is fulfilled in Steps 2 - 8 and Steps 12 - 16.

In this embodiment of the present invention, the AF processing in the macro zone is performed continuously from the aforementioned I.

In other words, when Step 26 follows according to the decision in Steps 18, 19 on which the focusing lens group is judged present at the Near or Far end on the extension of the direction in which the lens group is driven, a decision is made on whether a power zoom mode has been set up in Step 26. If YES, a decision is made on whether power zooming is fulfilled in the macro zone in Step 27.

When the power zoom made is not the one set up in the macro zone, the flow returns to Step 2 (A).

When the power zoom mode is the one set up in the macro zone, the drive amount dPX of the zooming lens group is computed from the defocus amount dx detected by the detector such as the AF CCD 17 in Step 28 and a decision is made on the direction in which the zooming lens group is driven according to the signal from the detection means in Step 29.

When the drive direction is pointed to the Near side, a decision is made on whether the zooming lens group in the macro zone is located at the Near or Far end in Step 30 and, when it is pointed to the Far side, such a decision is made in Step 31.

When the focusing lens group is located at the end on the extension of the direction in which the lens group is driven, the decision made in Step 30 or 31 becomes YES and the flow returns to Step 2.

This is because focusing by means of the zooming lens group has its limitations.

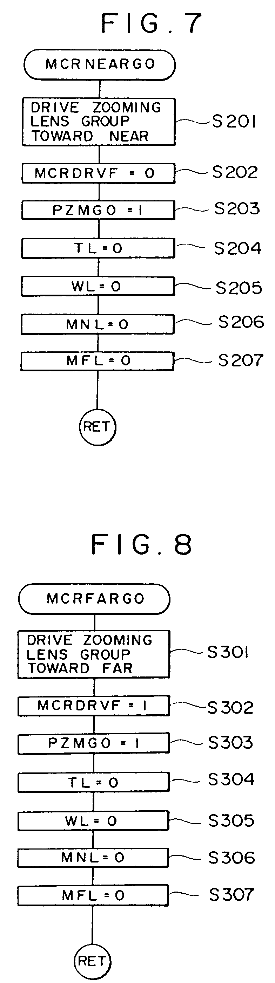

If NO in Steps 30, 31, Steps 32, 33 are followed, respectively, wherein a subroutine (Fig. 7) for driving the zooming lens group in the macro zone toward the Near end or another subroutine (Fig. 8) for driving the zooming lens group in the macro zone toward the Far end is executed. Step 34 is followed.

A decision is then made on whether the driving by dPX has been completed in Step 34. If YES, Step 35 follows.

In Step 35, a subroutine (Fig. 9) for suspending the driving of the zooming lens group is executed and the zooming lens group is stopped in a substantially in-focus position.

If NO, Step 36 follows, wherein a decision is made on whether the zoom pulse is output at intervals exceeding 100 msec.

If the zoom pulse is output at intervals exceeding 100 msec, Step 37 is followed and the subroutine (Fig. 9) for suspending the driving of the zooming lens group is executed as the zooming lens group is considered to be located at the Far or Near end in the macro zone.

If the zoom pulse is output at intervals of not greater than 100 msec, the flow returns to Step 34 and keeps cycling through Steps 34, 36 to wait for the completion of dPX or for the output of PZ pulser 69 to be delivered at intevals of 100 msec.

A decision is subsequently made on the direction in which the zooming lens group has been driven in Step 38 and a flag representing the detection of the Near or Far end of the focusing lens group in the macro zone because of an annular zoom drive is set. Step 2 then follows.

As set forth above, Step 2 is followed by Steps 28 - 34 and Step 35, and releasing becomes possible in Steps 12 - 15 to ensure that the power zoom photographic lens is in focus automatically in the macro zone.

Referring now to Figs. 6 - 14, the subroutines shown in Figs. 4 and 5 will subsequently be described.

Referring to Fig. 6, the initializing subroutine will be described.

When the initializing subroutine is initiated, a decision is first made on whether the AF mode switch is held on in Step 101. When the switch is turned on to set up the AF mode, the subroutine for driving the focusing lens group up to the Far end is executed in Step 102 (Fig. 11).

In Step 103, a decision is made on whether the AF pulse is output at intervals exceeding 100 msec.

This is because the output interval exceeding 100 msec is considered indicative of the fact that the focusing lens group is located at the Far end.

If the output interval exceeds 100 msec, an AF stop subroutine (Fig. 14) is executed. A flag representing the presence of the focusing lens group at the Far end and another flag representing the absence thereof at the Near end are set in Steps 105, 106. Step 100 is then followed.

When the manual mode is judged in effect in Step 101, on the other hand, flags representing the absence of the focusing lens group at the Far and Near ends are set in Steps 107, 108, respectively. Step 109 is then followed.

In Step 109, the number of pulses Pinf corresponding to the distance of the focusing lens group from the Far end is set to 0. In Steps 110, 111, flags are set: one representing that the zooming lens group is not located at the Wide end and the other representing that the lens group is not located at the Tele end.

In Steps 112, 113, subsequently, flags respectively representing the absence of the focusing lens group at the Far and Near ends in the macro zone because of the annular zoom drive are set in order.

In Steps 114 - 116, further, flags respectively representing release inhibition, non-fulfillment of the manual focusing and the autofocusing are set in order.

In Step 117, a decision is made on the on/off state of the macroswitch. What is based on the decision made in this step falls under the data on whether the brush position interlocked with the zooming lens group is in the zooming or macro zone.

If the macroswitch is turned on (i.e. the zooming lens is located in the macro zone), a flag is set in Step 118, whereas if it is turned off, a flag is set in Step 119.

In Steps 120 - 122 followed by Step 118 or 119, flags respectively representing the focusing lens group and the zooming lens group remaining undriven, and the zooming lens remaining undriven on an AF basis in the macro zone are set in order.

In Steps 123 - 125, moreover, flags respectively representing the possibility of the power zoom drive, commencement of constant control over the image magnification, and the image magnification under constant control are set to 0 in order, whereby a 5 msec timer is started in Step 126, and allowed to be interrrupted in Step 127. The flow is then returned.

Referring to Fig. 7, the subroutine for driving the zooming lens group in the Near direction in the macro zone will subsequently be described.

When the subroutine is initiated, the zooming lens group starts being driven in the Near direction in Step 201. Since the zooming lens group is being driven in the Near direction, in Step 202, a flag representing the zooming lens group being driven in the Far direction is set to 0 and moreover a flag representing the zooming lens group being driven in the macro zone is set in Step 203.

In Steps 204, 205, flags respectively representing the absence of the zooming lens group at the Tele and Wide ends are set in order.

In Steps 206, 207, flags respectively representing the absence of the zooming lens group at the Near and Far ends in the macro zone are set in order. The flow is then returned.

Referring to Fig. 8, the subroutine for driving the zooming lens group in the Far direction in the macro zone will be described.

When this subroutine is initiated, the zooming lens group starts being driven in the Far direction in Step 301. In Step 302, a flag representing the zooming lens group being driven in the Far direction is set to 1, whereas a flag representing the zooming lens group being driven for focusing purposes in the macro zone is set to 1 in Step 303.

In Step 304, 305, flags respectively representing the absence of the zooming lens group at the Tele and Wide ends are set in order.

In Steps 306, 307, flags respectively representing the absence of the zooming lens group ot the Near and Far ends in the macro zone are set in order.

Referring to Fog. 9, the contents of the subroutine for suspending the driving of the zooming lens group will be described.

With respect to the subroutine for suspending the zooming operation, a decision is made on whether the zooming lens group is being driven in the zooming or macro zone in Steps 401, 402. If the zooming lens group is being driven in neither zone, the flow as it stands is then returned.

When the zooming lens group is being driven in either zone, the zooming lens group stops being driven in Step 403 and flags representing the zooming lens group being stopped in Steps 404, 405 are set in order. The flow is then returned.

Referring to Fig. 10, the contents of a subroutine for driving the focusing lens group in the direction of Near end will be described.

When the subroutine for driving the focusing lens group in the direction of Near end is initiated, the focusing lens group starts being driven in the direction of Near end in Step 501. Since the focusing lens group is being driven in the Near direction in Step 502, a flag representing the focusing lens group being driven in the Far direction is set to 0 and a flag representing the focusing lens group being driven is set in Step 503.

In Steps 504, 505, flags respectively representing the nonexistence of the focusing lens group at the Near and Far ends are set in order and the flow is returned.

Referring to Fig. 11, the contents of a subroutine for driving the focusing lens group in the direction of Far end will subsequently be described.

When the subroutine for driving the focusing lens group in the direction of Far end is initiated, the focusing lens group starts being driven in the direction of Far end Step 601. Since the focusing lens group is being driven in the Far direction in Step 602, a flag representing the focusing lens group being driven in the Far direction is set to 1 and a flag representing the focusing lens group being driven is set in Step 603.

In Steps 604, 605, flags respectively representing the nonexistence of the focusing lens group at the Near and Far ends are set in order, and the flow is returned.

The contents of the AF end-point processing subroutine shown in Fig. 12 will subsequently be described.

When the AF end-point processing subroutine is initiated, the AF stop subroutine (Fig. 14) is executed in Step 701 and the number of pulses dPX used to drive the focusing lens group until it stops is computed in Step 702.

A decision is then made on whether the focusing lens group has been driven in the direction of Far end in Step 703. If NO, dPX calculated in Step 702 is added to the number of pulses Pinf corresponding to the delivered amount of the focusing lens group from the Far end to set up Pinf in Step 704. The absolute value of the difference between Pinf and Pnear (the number of pulses from Far to Near end) is defined as Pint (the number of pulses up to the Near end) in Step 705. Step 706 then follows.

A decision is then made on whether Pint is smaller than $\underline{e}$ (the number of allowable error pulses; e.g. e = 10) in Step 706. If NO, the subroutine (Fig. 10) for driving the focusing lens group in the direction of Near end is executed in Step 707/and a decision is made on whether the AF pulse is output at intervals exceeding 100 msec in Step 708.

If the output interval exceeds 100 msec, the AF stop subroutine (Fig. 14) of the focusing lens group is executed in Step 709. If the output interval is not greater than 100 msec, Step 708 is repeated to wait for the end point to be detected and Step 710 follows.

If YES in Step 706, on the other hand, Steps 707-709 are skipped and Step 710 follows because errors are within a predetermined range.

A flag representing the existence of the focusing lens group at the Near end is set in Step 710 and Pinf is rewritten to Pnear so as to eliminate the accumulation of errors in Step 711. The flow is then returned.

If YES in Step 703, on the other hand, dPX caluculated in Step 702 is subtracted from the number of pulses Pinf corresponding to the delivered amount of focusing lens group from the Far end to set up Pinf in Step 712 and the absolute value of Pinf defined as Pint (the number of pulses up to the Near end). Step 714 then follows.

In Step 714 like Step 706, a decision is made on whether Pint is smaller than $\underline{e}$ (the number of allowable error pulses; e.g. e = 10). If NO, the subroutine (Fig. 11) for driving the focusing lens group in the direction of Far end is executed in Step 715 and Step 716 follows.

In Step 716, a decision is made on whether the AF pulse is output at intervals exceeding 100 msec. If the output interval exceeds 100 msec, the AF stop subroutine (Fig. 14) of the focusing lens group is executed in Step 717. If the output interval is not greater than 100 msec, Step 716 is repeated to wait for the end point to be detected and Step 718 follows.

If YES in Step 714, on the other hand, Steps 715-717 are skipped and Step 718 follows because errors are within a predetermined range.

In Step 718, a flag representing the existence of the focusing lens group at the Far end is set and the starting point is modified with 0 = Pinf in Step 719. The flow is then returned.

Referring to Fig. 13, the contents of the AF drive stop subroutine will subsequently be described.

When the AF drive stop subroutine is initiated, the AF stop subroutine (Fig. 14) is executed in Step 801, and the number of pulses dPX used to drive the focusing lens group until it stops is computed in Step 802. Step 803 then follows.

In Step 803, a decision is made on whether the focusing lens group has been driven in the direction of Far end. If NO, dPX caluculated in Step 802 is added to the number of pulses Pinf corresponding to the delivered amount of the focusing lens group from the Far end to set up Pin in Step 804. Step 805 then follows.

In Step 805, a decision is made on whether Pinf is smaller than Pnear. If YES, the flow is returned, whereas if NO, the subroutine (Fig. 10) for driving the focusing lens group in the direction of Near end is executed in Step 806. Step 807 then follows.

In Step 807, a decision is made on whether the AF pulse is output at intervals exceeding 100 msec and therefore whether the end point is reached. If the output interval exceeds 100 msec, the AF stop subroutine (Fig. 14) is executed in Step 808 and Step 809 is followed. If it is not greater than 100 msec, Step 807 is repeated.

In Step 809, a flag representing the existence of the focusing lens group at the Near end is set and Pinf is rewritten to Pnear in Step 811. The flow is then returned.

If YES in Step 803, on the other hand, dPX calculated in Step 802 is subtracted from the number of pulses Pinf corresponding to the delivered amount of focusing lens group from the Far end to set up Pinf in Step 811 and a decision is made on whether Pinf is positive or negative in Step 812.

If YES, the flow is returned. If NO, the subroutine (Fig. 11) for driving the focusing lens group in the direction of Far end is executed in Step 813 and Step 814 follows.

In Step 814 like Step 807, a decision is made on whether the AF pulse is output at intervals exceeding 100 msec.

If the output interval exceeds 100 msec, Step 815 follows, wherein the AF stop subroutine (Fig.14) is executed, and Step 816 follows. If it is not greater than 100 msec, Step 814 is repeated.

In Step 816, a flag representing the existence of the focusing lens group at the Far end is set and Pinf is assumed 0 in Step 817. The flow is then returned.

Referring to Fig. 14, the AF stop subroutine will subsequently be described.

When the AF stop subroutine is initiated, a decision is made on whether the focusing lens group is being driven on an AF basis in Step 901. If YES, Step 902 follows, whereas if NO, the flow is returned.

In Step 902, the focusing lens group stops and a flag representing the focusing lens group being stopped is set in Step 903. The flow is then returned.

As set forth above, automatic focusing is consequently fulfilled in the macro zone of the photographic lens in such a manner that the second lens group for effecting zooming in the zooming zone is first driven by the second drive means to be substantially in focus to ensure that the second lens group is automatically in focus even in the macro zone because the first lens group for effecting focusing in the zooming zone is then relatively driven by the first drive means to be accurately in focus.

In the following the subroutine B for constant image magnification control mode will be described with reference to Fig. 15.

In S-B1 shown in Fig. 15, the process sets the flag ONIMG to 1 for representing whether the image magnification constant control operation takes place or not (control state). The process advances to S-B2. The process computes the amount $X_o$ of advancing of the focusing lens group from the infinite terminus in S-B2 and then advances to S-B3. The process inputs the present focal length information of the zooming lens group, $f_0$ in S-B3 and then advances to S-B4. The process determines whether the amount $X_o$ of advancing is smaller than $f_0/150$ or not. In this determination, whether the amount $X_o$ of advancing is smaller than $f_0/150$ or not means whether the image magnification is too small to be controlled or not. When the image magnification is too small, a change of the image magnification caused by moving of the subject cannot be precisely detected. Thus, in this case, when the determined condition is YES, the process advances to S-B18 so as to turn off the in-focus indication. The process generates an out-of-control signal to inform the operator that the image magnification constant control operation is disabled in S-B19. The process sets the flag SWREN to 0 representing whether the release operation is permitted or not in S-B20. The process sets the flag ONIMG to 0 for representing whether the image magnification constant control operation takes place or not (non-control state) in S-B21. The process sets the flag MAGIMG to 0 for representing whether to start the image magnification constant operation or not in S-B22 and then advances to S2 shown in Fig. 4.

When the process determines that the image magnification is not too small in S-B4, the determined condition is NO and the process advances to S-85. The process computes $m_0 = x_0/f_0$ in S-85 and then advances to S-B6. The process computes the amounts dx of defocusing in S-B6 and then advances to S-B7. The process determines whether the contrast of the subject is low or not in S-B7. When the determined condition is YES (low contrast), the process advances to S-B23. The process sets the flag SWREN to 0 for representing whether the release operation is permitted or not in S-B23. The process turns off the in-focus indication in S-B24. The process advances to S2 shown in Fig. 4 so as to enter a loop until the contrast becomeshigh. For improving the operability, this operation allows the image magnification constant control operation to be continued when the subject is returned to a predetermined position on the screen even if it is lost from the screen or it is moved in a horizontal direction and the contrast decreases.

When the determined condition is NO, the process advances to S-B8 so as to determine whether the subject is being focused or not. When the determined condition is YES (focused), since the contrast is high and the subject does not move from the former position, the process advances to S-B16. The process sets the flag SWREN to 1 for representing whether the release operation is permitted or not (release permission) in S-B16. The process advances to S-B17 so as to turn on the in-focus indication and returns back to S-B1 so as to enter a loop. When the determined condition is NO (not focused) in S-B8, since the lens should be moved, the process advances to S-B9. The process computes the amount dp of driving of the focusing lens group, using the amount of defocusing dx in S-B9 and then advances to S-B10.

The process computes the focal length of the focusing lens group of which the amount of defocusing dx occurs using the equation (7) in S-B10 and then advances to S-B11. In this step, the focal length f of the equation (7) is assumed to be f1. Assuming that the focal length at the wide terminus of the focusing lens group is fW and that at the TL terminus is ft, to perform the image magnification constant control operation, it is necessary that fW < f1 < ft. The process determines that in S-B11. When f1 is not in the range, the determined condition is NO and the process advances to S-B25. The process sets the flag SWREN to 0 for representing whether the release operation is permitted or not in S-B25. The process turns off the in-focus indication in S-B26 and then advances to E (not shown) for correction.

When f1 is in the range of fW < f1 < ft in S-B11, the determined condition is YES, and the process advances to S-B13. The process computes the control image magnification $r = f1/f_0$ and then advances to S-B13. The process inputs constants A, B, and C for computing the amount Pz of driving of the zooming lens group from the lens ROM 43 to the lens CPU 44 or main CPU 6 and then advances to S-B14. The process computes the amount Pz of driving of the equation (11) using the constants A, B, and C in S-B14 and advances to S-B15. The process determines whether dp and Pz are 0 or not in S-B15. When both are not 0, the determined condition is NO and the process advances to N (not shown) for correction. When both are 0, the determined condition is YES, and the process advances to S-B16 so as to set the flag SWREN to 1 for representing whether the release operation is permitted or not (release permission). The process advances to S-B17 so as to turn on the in-focus indication and then returns back to S-B1 so as to enter a loop.

## Claims

1. An auto-focusing system for a camera comprising:

   a photographic zoom lens (L) including a focusing lens group and a zooming lens group which is arranged for displacement in a zooming zone so as to provide zooming and in a macro zone outside said zooming zone so as to provide focusing;

   focus driving means (63, 60) arranged to drive said focusing lens group;

   focal length change means (64, 61) arranged to drive said zooming lens group;

   detecting means (17, 18) for detecting whether the photographic lens (L) is brought into in-focus condition; and focus control means (66) arranged to focus said photographic lens (L) with said focal length change means (64, 61) when the zooming lens group is in said macro zone, and with said focus-driving means (63, 60) when the zooming lens group is in said zooming zone, **characterized** by the focus control means (66) being arranged to focus said photographic lens (L) with said focus-driving means (63, 60) also when the zooming lens group is in said macro zone, and by

   determining means (72) for determining the position of said focusing lens group, and wherein said focus control means (66) is arranged to focus said photographic lens (L) with said focal length change means (64, 61) when said position determining means (72) determine that the focusing lens group is located at the far end or at the near end of its displacement range.

2. The autofocusing system according to claim 1 wherein said focal length change means (64, 67) comprises a motor (61) for automatically driving said zooming lens group.

## Patentansprüche

1. Automatisches Fokussierungssystem für eine Kamera umfassend:

ein fotografisches Varioobjektiv (L) mit einer Fokussierlinsengruppe und einer Variolinsengruppe, die in einem Variobereich zur Brennweitenänderung und in einem Makrobereich außerhalb des Variobereichs zum Fokussieren verstellbar ist;

Fokussierantriebsmittel (63, 60) zum Antrieb der Fokussierlinsengruppe;

Brennweitenänderungsmittel (64, 61) zum Antrieb der Variolinsengruppe;

Erfassungsmittel (17, 18) zum Erfassen, ob das fotografische Objektiv (L) in den fokussierten Zustand gebracht ist;

und Fokussiermittel (66) zum Fokussieren des fotografischen Objektivs (L) mit den Brennweitenänderungsmitteln (64, 61), wenn die Variolinsengruppe in dem Makrobereich ist, und mit den Fokussierantriebsmitteln (63, 60), wenn die Variolinsengruppe in dem Variobereich ist, **gekennzeichnet** durch

die Anordnung der Fokussiersteuermittel (66) zum Fokussieren des fotografischen Objektivs (L) mit den Fokussierantriebsmitteln, (63, 60) auch wenn die Variolinsengruppe in dem Makrobereich ist und durch

Bestimmungsmittel (72) zum Bestimmen der Position der Fokussierlinsengruppe, wobei die Fokussiersteuermittel (66) zum Fokussieren des fotografischen Objektivs (L) mit den Brennweitenänderungsmitteln (64,61) geeignet sind, wenn die Bestimmungsmittel (72) bestimmen, daß die Fokussierlinsengruppe sich an dem Fern-oder an dem Nah-Ende ihres Verstellbereichs befindet.

2. Automatisches Fokussierungssystem für eine Kamera nach Anspruch 1, bei dem die Brennweitenänderungsmittel (64, 61) einen Motor (61) zum automatischen Antrieb der Variolinsengruppe enthalten.

**Revendications**

1. Système de mise au point automatique pour un appareil photo comprenant :

un objectif de photographie zoom (L) incluant un groupe de lentilles de mise au point et un groupe de lentilles de changement de plan qui est conçu pour se déplacer dans une zone de changement de plan de façon à effectuer le changement de plan et dans une zone de macrophotographie, extérieure à ladite zone de changement de plan, de façon à effectuer la mise au point ;

un moyen d'entraînement de mise au point (63, 60) conçu pour entraîner ledit groupe de lentilles de mise au point ;

un moyen de changement de distance focale (64, 61) conçu pour entraîner ledit groupe de lentilles de changement de plan ;

un moyen de détection (17, 18) pour détecter si l'objectif de photographie (L) est à l'état au point ; et

un moyen de commande de mise au point (66) conçu pour mettre au point ledit objectif de photographie (L) à l'aide dudit moyen de changement de distance focale (64, 61) lorsque le groupe de lentilles de changement de plan est dans ladite zone de macrophotographie, et à l'aide dudit moyen d'entraînement de mise au point (63, 60) lorsque le groupe de lentilles de changement de plan est dans ladite zone de changement de plan, caractérisé :

en ce que le moyen de commande de mise au point (66) est conçu pour mettre au point ledit objectif de photographie (L) à l'aide dudit moyen d'entraînement de mise au point (63, 60) également lorsque le groupe de lentille de changement de plan est dans ladite zone de macrophotographie ; et

par un moyen de détermination (72) pour déterminer la position dudit groupe de lentilles de mise au point, et en ce que ledit moyen de commande de mise au point (66) est conçu pour mettre au point ledit objectif de photographie (L) à l'aide dudit moyen de changement de distance focale (64, 61) lorsque ledit moyen de détermination de position (72) détermine que le groupe de lentilles de mise au point est situé à l'extrémité éloignée ou à l'extrémité rapprochée de sa plage de déplacement.

2. Système de mise au point automatique selon la revendication 1, dans lequel ledit moyen de changement de distance focale (64, 61) comprend un moteur (61) pour entraîner automatiquement ledit groupe de lentilles de changement de plan.

FIG. I

CB CAMERA BODY

EP 0 361 523 B1

FIG. 2

FIG. 3

EP 0 361 523 B1

F I G. 4

```
                    ┌─────────┐
                    │  START  │
                    └────┬────┘        ╱‾╲
                         │           ╱ A  ╲
                    ┌────┴────┐ S1   ╲____╱
                    │INITIALIZE│───────┘
                    └────┬────┘
                         │
              N      ╱───┴───╲   S2
        ┌──────────<   AF     >
        │           ╲ MODE SW ╱
        │            ╲  ON   ╱
      ╱‾╲             ╲─┬──╱
     ╱ M ╲             │Y
     ╲___╱         ╱───┴───╲  S3        Y
                  <  MF = 1  >──────────┐
                   ╲───┬───╱            │
                       │N   S4         ╱‾╲
              N    ╱───┴───╲          ╱ K ╲
        ┌─────────< SWS  ON >         ╲___╱
        │          ╲───┬───╱
        │              │Y
        │          ┌───┴───┐ S5
        │          │ AF = 1 │
        │          └───┬───┘
        │       ┌──────┴──────┐
        │       │ CALCULATE   │ S6
        │       │ DEFOCUS AMOUNT│
        │       │ (dX)        │
        │       └──────┬──────┘
        │   Y      ╱───┴───╲  S7
        ├─────────<  LOW    >
        │          ╲CONTRAST╱
       ╱‾╲          ╲──┬──╱
      ╱ A ╲            │N    S8
      ╲___╱        ╱───┴───╲      Y
                  < IN-FOCUS >──────────────────────────┐
                   ╲───┬───╱                            │
                       │N                          ╱────┴────╲ S12
                  ┌────┴────┐ S9              Y   < MAGIMG = 1 >
                  │ SWREN = 0│          ┌────────< ╲─────────╱
                  └────┬────┘           │          │N
               ┌───────┴──────┐    ┌────┴─────┐  ┌─┴──────┐
               │ TURN  OFF    │S10 │ TURN OFF │  │ TURN ON│
               │ IN-FOCUS     │    │ IN-FOCUS │S16│ IN-FOCUS│S13
               │ DISPLAY      │    │ DISPLAY  │  │ DISPLAY │
               └───────┬──────┘    └────┬─────┘  └────┬────┘
               ┌───────┴──────┐        ╱‾╲       ┌────┴────┐
               │CALCULATE DRIVE│      ╱ B ╲      │SWREN = 1│S14
               │AMOUNT (dP) OF │S11   ╲___╱      └────┬────┘
               │FOCUSING LENS  │             S15      │
               │GROUP FROM dX  │            ╱───┴───╲      Y
               └───────┬──────┘            <  AFS = 1 >────┐
                   ╱───┴───╲  S17           ╲───┬───╱      │
                  <  DRIVE   > N                 │N        │
                  < DIRECTION >───────┐          │        │
                  <   NEAR   >        │         ╱‾╲        │
                   ╲───┬───╱          │        ╱ A ╲       │
                       │Y  S18        │        ╲___╱       │
          Y       ╱───┴───╲      Y ╱──┴────╲ S19           │
        ┌────────<  NL = 1  >    ┌<  FL = 1  >             │
        │         ╲───┬───╱      │ ╲───┬───╱               │
        │             │N         │     │N                  │
       ╱‾╲        ┌───┴───┐S20   │ ┌───┴───┐ S21           │
      ╱ I ╲       │AFNEARGO│      │ │AFFARGO │              │
      ╲___╱       └───┬───┘      │ └───┬───┘               │
        │             │          │     │                   │
        │         ╱───┴───╲ S22  └─────┤                   │
        │        < TERMINATION>   Y    │                   │
        │        < OF DRIVE   >────────┤                   │
        │        <  AMOUNT dP >        │                   │
        │         ╲───┬───╱            │                   │
        │             │N  S23          │                   │
        │   N     ╱───┴───╲            │                   │
        └────────<   AF     >          │                   │
                 < PULSE OUTPUT>       │                   │
                 < INTERVAL EXCEEDING>  │                  │
                 < 100 (msec) >        │                   │
                  ╲───┬───╱            │                   │
                      │Y  S24          │  S25              │
               ┌──────┴──────┐   ┌─────┴──────┐           │
               │ AF END-POINT│   │AF DRIVE STOP│          │
               │ PROCESSING  │   └─────┬──────┘           │
               └──────┬──────┘         │                  │
                      │                │                  │
                     ╱‾╲───────────────┘                  │
                    ╱ A ╲                                 │
                    ╲___╱                                 │
```

EP 0 361 523 B1

# FIG. 5

15

FIG. 6

INITIALIZE

AF MODE SW ON — S101

AFFARGO — S102

AF PULSE OUTPUT INTERVAL EXCEEDING 100 (msec) — S103

AFSTOP — S104

S107 — FL = 0

FL = 1 — S105

NL = 0 — S108

NL = 0 — S106

Pinf = 0 — S109

WL = 0 — S110

TL = 0 — S111

MFL = 0 — S112

MNL = 0 — S113

SWREN = 0 — S114

MF = 0 — S115

AF = 0 — S116

S117 — MACRO SW ON

S119

S118 — PZMACRO = 1

PZMACRO = 0 — S119

AFGO = 0 — S120

PZGO = 0 — S121

PZMGO = 0 — S122

PZMODE = 0 — S123

MAGIMG = 0 — S124

ONIMG = 0 — S125

START TIMER — S126

TIMER INTERRUPTION PERMITTED — S127

RET

# FIG. 7

```
        ( MCRNEARGO )
              |
    ┌──────────────────┐
    │ DRIVE  ZOOMING   │
    │ LENS  GROUP      │──── S201
    │ TOWARD   NEAR    │
    └──────────────────┘
              |
    ┌──────────────────┐
    │  MCRDRVF = 0     │──── S202
    └──────────────────┘
              |
    ┌──────────────────┐
    │   PZMGO = 1      │──── S203
    └──────────────────┘
              |
    ┌──────────────────┐
    │    TL = 0        │──── S204
    └──────────────────┘
              |
    ┌──────────────────┐
    │    WL = 0        │──── S205
    └──────────────────┘
              |
    ┌──────────────────┐
    │    MNL = 0       │──── S206
    └──────────────────┘
              |
    ┌──────────────────┐
    │    MFL = 0       │──── S207
    └──────────────────┘
              |
           ( RET )
```

# FIG. 8

```
        ( MCRFARGO )
              |
    ┌──────────────────┐
    │ DRIVE  ZOOMING   │
    │ LENS  GROUP      │──── S301
    │ TOWARD   FAR     │
    └──────────────────┘
              |
    ┌──────────────────┐
    │  MCRDRVF = 1     │──── S302
    └──────────────────┘
              |
    ┌──────────────────┐
    │   PZMGO = 1      │──── S303
    └──────────────────┘
              |
    ┌──────────────────┐
    │    TL = 0        │──── S304
    └──────────────────┘
              |
    ┌──────────────────┐
    │    WL = 0        │──── S305
    └──────────────────┘
              |
    ┌──────────────────┐
    │    MNL = 0       │──── S306
    └──────────────────┘
              |
    ┌──────────────────┐
    │    MFL = 0       │──── S307
    └──────────────────┘
              |
           ( RET )
```

# FIG. 9

ZOOMSTOP

S401 — PZGO = 1 ——Y→

N

S402 — PZMGO = 1 ——Y→

N

S403 — STOP DRIVING ZOOMING LENS GROUP

PZGO = 0 — S404

PZMGO = 0 — S405

RET

# FIG. 10

AFNEARGO

DRIVE FOCUSING LENS GROUP TOWARD NEAR — S501

AFDRVF = 0 — S502

AFGO = 1 — S503

NL = 0 — S504

FL = 0 — S505

RET

# FIG. 11

AFFARGO

DRIVE FOCUSING LENS GROUP TOWARD FAR — S601

AFDRVF = 1 — S602

AFGO = 1 — S603

NL = 0 — S604

FL = 0 — S605

RET

18

# F I G. 12

AF END-POINT
PROCESSING

AFSTOP — S701

CALCULATE NUMBER OF
PULSES (dPX) USE TO — S702
DRIVE FOCUSING LENS
GROUP UNTIL STOPPED

S703

AFDRVF = 1 — Y

N

Pinf = Pinf + dPX — S704

Plmt = |Pinf − Pnear| — S705

S706

Plmt < ε — Y

N

S707

AFNEARGO

S708

AF
PULSE OUTPUT
N — INTERVAL EXCEEDING
100 (msec)

Y

S709 — AFSTOP

S710 — NL = 1

S711 — Pinf = Pnear

RET

Pinf = Pinf − dPX — S712

Plmt = |Pinf| — S713

S714

Plmt < ε — Y

N

S715

AFFARGO

S716

AF
PULSE OUTPUT
N — INTERVAL EXCEEDING
100 (msec)

Y

S717 — AFSTOP

S718 — FL = 1

S719 — Pinf = 0

RET

FIG. 13

```
      ( AF  DRIVE  STOP )
              │
     ┌────────────────┐
     │    AFSTOP      │──── S801
     └────────────────┘
              │
  ┌──────────────────────────┐
  │ CALCULATE  NUMBER  OF    │
  │ PULSES (dPX) USED  TO     │──── S802
  │ DRIVE  FOCUSING  LENS     │
  │ GROUP  UNTIL  STOPPED     │
  └──────────────────────────┘
              │              Y ┌─── S803
          ◇ AFDRVF = 1 ◇────────────────────────┐
              │ N                                │
  ┌────────────────┐ S804            ┌────────────────┐ S811
  │ Pinf = Pinf + dPX │             │ Pinf = Pinf - dPX │
  └────────────────┘                └────────────────┘
              │           S805                │          S812
          ◇ Pinf < Pnear ◇─Y──┐          ◇ Pinf > 0 ◇─Y──┐
              │ N            │              │ N          │
              │ S806         │              │ S813       │
     ┌────────────────┐      │     ┌────────────────┐    │
     │   AFNEARGO     │      │     │   AFFARGO      │    │
     └────────────────┘      │     └────────────────┘    │
              │              │              │            │
          ┌───▼───┐ S807     │          ┌───▼───┐ S814   │
       N  │  AF   │          │       N  │  AF   │        │
     ┌────◇ PULSE OUTPUT ◇   │      ┌───◇ PULSE OUTPUT ◇ │
     │    │ INTERVAL EXCEEDING│     │    │ INTERVAL EXCEEDING
     │    │ 100 (msec) │      │     │    │ 100 (msec) │   │
     └───►└───────┘          │     └───►└───────┘        │
              │ Y            │              │ Y          │
   S808 ┌────────────────┐   │   S815 ┌────────────────┐ │
        │   AFSTOP       │   │        │   AFSTOP       │ │
        └────────────────┘   │        └────────────────┘ │
              │              │              │            │
  S809 ┌────────────────┐    │  S816 ┌────────────────┐  │
       │    NL = 1       │   │       │    FL = 1       │  │
       └────────────────┘    │       └────────────────┘  │
              │              │              │            │
  S810 ┌────────────────┐    │  S817 ┌────────────────┐  │
       │  Pinf = Pnear   │   │       │   Pinf = 0      │  │
       └────────────────┘    │       └────────────────┘  │
              │◄─────────────┘              │◄───────────┘
            (RET)                         (RET)
```

FIG. 14

```
        ( AFSTOP )
              │
   S901 ◇ AFGO = 1 ◇──N──┐
              │ Y        │
   S902 ┌────────────────┐
        │ STOP  DRIVING   │
        │ FOCUSING  LENS  GROUP │
        └────────────────┘
              │          │
   S903 ┌────────────────┐
        │   AFGO = 0     │
        └────────────────┘
              │◄─────────┘
            (RET)
```

FIG. 15